# EUROPÄISCHE PATENTANMELDUNG

(11) **EP 2 151 783 A2**
(43) Veröffentlichungstag der Anmeldung: **10.02.2010**
(21) Anmeldenummer: 09009746.0
(22) Anmeldetag: 28.07.2009
(51) Int. Cl.: G06F 21/02

(54) **Verfahren und Vorrichtung um Änderungen an Daten zu erkennen**

(30) Priorität: 28.07.2008 DE 102008035095
(71) Anmelder: Vincotech (Germany) GmbH, 82008 Unterhaching (DE)
(72) Erfinder: Skuras, Ingo, 81359 München (DE)
(74) Vertreter: Grünecker, Kinkeldey, Stockmair & Schwanhäusser Anwaltssozietät

(57) **Zusammenfassung**

Die vorliegende Erfindung bezieht sich auf ein Verfahren und eine Vorrichtung um Änderungen bei relevanten Daten leicht erkennbar zu machen. Die Daten werden in dem gleichen Sektor eines Flash-Speichers gespeichert, wie ein fur den Start oder Betrieb eines Gerätes notwendiges Programm. Aufgrund der Eigenschaften von Flash-Speicher wird bei einer Löschung der relevanten Daten der ganze Sektor inklusive dem Programm gelöscht, wodurch das Gerät nicht mehr betriebsbereit ist, und eine Fehlfunktion und Schaden vermieden werden kann. Weiterhin wird eine bitweise-invertierte Form der Daten in dem Flash-Speicher gespeichert, und es wird geprüft ob die originale und invertierte Form der Daten übereinstimmen. Eine Änderung der Daten, welche für die Prüfung nicht erkennbar ist, setzt ein Löschen des Sektors voraus, wodurch auch das Programm gelöscht wird und damit das Gerät nicht mehr betriebsbereit ist.

## Beschreibung

### FELD DER ERFINDUNG

Die vorliegende Erfindung bezieht sich auf ein Verfahren und eine Vorrichtung zum Speichern von zu schützenden Daten damit Änderungen an den Daten erkannt werden können. Insbesondere bezieht sich die vorliegende Erfindung auf eine Vorrichtung, die in einer Vielzahl von unterschiedlichen Gebieten einsetzbar ist.

### HINTERGRUND DER ERFINDUNG

Nicht-flüchtige Speichermedien werden üblicherweise verwendet um wichtige Information zu speichern, wie beispielsweise Startprozeduren oder Konfigurationsdateien eines Systems. Ein BIOS-Programm ist zum Starten eines Rechners unerlässlich, und wurde deshalb lange Zeit bei der Herstellung auf einem ROM-Speicher (Read Only Memory) abgelegt. Das BIOS-Programm kann dann nicht mehr geändert werden, außer man tauscht den kompletten ROM-Speicher gegen einen neuen ROM-Speicher mit aktualisiertem BIOS-Programm aus.

Ein Gerät, wie beispielsweise eine Telematikeinheit, kann mehrere Standardkonfigurationen haben, die unterschiedliche Speicherkonfigurationen oder unterschiedliche Eingabe/Ausgabe Fähigkeiten ermöglichen. Diese Standardkonfigurationen sind notwendig damit das Gerät einwandfrei funktioniert, und dürfen nicht verändert werden.

Natürlich müssen sich die Standardkonfigurationen zum Einen auf einem nicht-flüchtigen Speichermedium befinden, damit diese bei einem Ausschalten, oder einer sonstigen Stromunterbrechung des Telematikgerätes, nicht verloren gehen. Anderseits muss sichergestellt werden, dass diese Konfigurationsdaten nicht (un)absichtlich gelöscht oder verändert werden, und somit zu einer Fehlfunktion des Gerätes führen.

Es gibt viele Mechanismen und Vorkehrungen um Daten auf einem Speichermedium zu schützen. Beispielsweise gibt es für Flash-Speicher die Möglichkeit einen Schreibzugriff nur zu erlauben wenn eine hohe Spannung, z.B. 12 Volt bei einem 5 Volt Flash-Speicher, an einen entsprechenden Pin des Flash-Speichers angelegt wird. Damit können Daten auf einem Flash-Speicher nur verändert oder gelöscht werden, wenn eine solche Spannung angelegt wird. In manchen System sind Spannungen in Höhe von 12 Volt aber nicht erreichbar; somit ist diese Schutzvorkehrung der Flash-Speicher nur bedingt einsetzbar. Außerdem ist ein zusätzlicher Pin am Gerät notwendig.

Weiterhin können auch bestimmte Pins in dem Flash-Speicher vorgesehen werden, die mittels eines Jumpers überbrückt werden müssen um einen Schreibzugriff zu erlauben. Das physikalische Umsetzen eines Jumpers für jeden Schreibzugriff auf einen Speicher kann sehr umständlich sein, speziell wenn der Flash-Speicher und damit die Pins mit dem Jumper schwer zugänglich sind.

Um Veränderungen an den Daten durch Software-Fehler zu verhindern, können Schreibroutinen Anwendung finden, die mit einer komplizierten Befehlsabfolge beginnen. Solche komplexen Befehlsabfolgen werden nicht zufällig durch unbeabsichtigte elektrische oder programmatische Aktionen generiert.

Eine weitere Alternative wäre die Daten auf ein ROM-Speichermedium zu haben, dessen Inhalt nicht verändert werden kann. Zwar sind unbeabsichtigte Veränderungen an den gespeicherten Daten auszuschließen, allerdings schränkt auch diese Variante die Benutzung und eventuell beabsichtige Veränderungen an den Daten sehr ein.

Gleichfalls kann eine bestimmte Konfiguration mit Hilfe von SMD (oberflächenmontiert; im Englischen: surface-mounted device) - Widerständen fest programmiert werden. Auch hier ist eine gewollte Veränderung der Konfiguration nicht ohne Weiteres möglich.

### ZUSAMMENFASSUNG DER ERFINDUNG

Die Aufgabe, die der vorliegenden Erfindung zugrunde liegt, besteht darin ein Verfahren bereitzustellen um Daten vor Veränderungen und Löschung zu schützen. Weiterhin soll eine Veränderung der Daten leicht zu erkennen sein. Das erfindungsgemäße Verfahren und die entsprechende Vorrichtung weisen nicht die obigen Probleme und Nachteile des Standes der Technik auf.

Mindestens eine dieser Aufgaben wird durch den Gegenstand der unabhängigen Patentansprüche gelöst. Vorteilhafte Weiterbildungen der vorliegenden Erfindung sind Gegenstand der abhängigen Patentansprüche.

Ein Grundgedanke der vorliegenden Erfindung besteht darin einen Nachteil von Flash-Speichern auszunutzen um bestimmte Daten auf einem Flash-Speicher vor Änderung oder Löschung zu schützen. Dabei wird zwar der eigentliche Vorgang des Änderns oder Löschens nicht unterbunden oder eingeschränkt, sondern eine Änderung oder Löschung der zu schützenden Daten ist gemäß der Erfindung zum Einen leicht ersichtlich. Anderseits wird durch die Erfindung verhindert, dass ein Gerät, das die zu veränderten oder gelöschten Daten verwendet, weiterhin betrieben werden kann.

Der Nachteil von Flash-Speichern, der hier für die Erfindung ausgenutzt wird, bezieht sich darauf, dass Flash-Speicher zwar bitweise programmiert werden können, allerdings nur ganze Sektoren zurückgesetzt/gelöscht werden können. Die zu schützenden Daten, seien es Konfigurationsdaten oder anderweitige zu schützende Daten, werden von dem Gerät verwendet. Ein für das Gerät wichtiges Programm wird ebenfalls auf dem Flash-Speicher gespeichert. Gemäß der Erfindung werden die zu schützenden Daten in den gleichen Speichersektor geschrieben wie wenigstens ein Teil dieses Programms, wobei dieser Teil des Programms für das korrekte Ausführen des Programms unerlässlich sein sollte.

Wenn nun die zu schützenden Daten gelöscht werden, wird auch ein Teil des Programms mitgelöscht, da nur der komplette Flash-Sektor gelöscht werden kann. Somit kann das Programm nicht mehr ausgeführt werden, und Fehlfunktionen des Gerätes aufgrund der Löschung der Daten werden vermieden. Einem Fachmann ist klar, dass es viele verschiedenartige Daten gibt, bei deren Löschung das dazugehörige Gerät am Besten nicht weiter arbeiten können sollte. Die hier angegebenen Beispiele für solche Daten, sind nicht als einschränkend zu sehen; es gibt zu viele Möglichkeiten für zu schützende Daten, als das sie in dieser Beschreibung aufgenommen werden könnten.

Ein weiterer Grundgedanke der Erfindung zielt darauf die zu schützenden Daten doppelt in den Flashspeicher zu schreiben, wobei die zu schützenden Daten einmal in bitweise-invertierter Form gespeichert werden. Im Allgemeinen kann man die zu schützenden Daten, seien es die nicht-invertierten oder die invertierten Daten, nicht so ändern, dass die beiden Daten weiterhin übereinstimmen. Es lässt sich somit leicht überprüfen ob die zu schützenden Daten noch korrekt sind, und von einem entsprechenden Programm wie vorgesehen verwendet werden können, auch ohne Fehler auszulösen.

Die einzige Möglichkeit die beiden Versionen der zu schützenden Daten zu ändern, sodass eine Korrespondenz weiter bestehen bleibt, ist eine der beiden Versionen zu löschen und so neu zu beschreiben, dass diese mit der geänderten anderen Version der zu schützenden Daten korrespondiert.

Wenn aber nun die beiden Grundgedanken dieser Erfindung zusammengeführt werden, können keine der beiden Daten gelöscht oder verändert werden ohne das Programm, das diese Daten verwendet, unbrauchbar zu machen. Jeweils ein Teil des Programms, das die Daten verwendet, wird in dem gleichen Speichersektor gespeichert, wie die beiden Versionen der zu schützenden Daten. Wenn nun eine Version dieser Daten gelöscht wird, um diese gemäß einer Änderung der anderen Version neu zu schreiben, wird derjenige Teil des Programms im gleichen Sektor mitgelöscht. Somit gibt es keine Möglichkeit die zu schützenden Daten zu verändern oder zu löschen ohne das dies festgestellt wird oder das Programm, das auf diese Daten zugreift, unbrauchbar wird.

Die Vorteile die sich aus der erfindungsgemäßen Speicherung der zu schützenden Daten ergeben sind vielfältig. Zum Einen ist keinerlei gesonderte Hardware notwendig um die Daten zu schützen; die eigentliche Speicherung erfolgt mit schon vorhandener Hardware. Da kaum restriktive Bedingungen an die Daten, an das Gerät oder das Programm gegeben sind, kann die Erfindung in sehr vielen unterschiedlichen Bereichen und Situation Anwendung finden.

Gemäß einer Ausführungsform der Erfindung wird ein Verfahren bereitgestellt zum Speichern zu schützender Daten auf einem Flash-Speicher. Der Flash-Speicher ist in eine Vielzahl von Speichersektoren unterteilt und wird in einem Gerät vorgesehen, das eine Programmroutine für dessen Start und/oder Betrieb benötigt. Die zu schützenden Daten werden in dem selben Speichersektor gespeichert, in dem wenigstens ein Teil der Programmroutine gespeichert ist.

Damit sind die zu schützenden Daten vor einen (un)beabsichtigten Löschen zwar nicht geschützt, aber das Programm und damit das Gerät sind nicht betriebsbereit.

Gemäß einer vorteilhaften Ausführungsform der Erfindung ist der Flash-Speicher vom Typ NOR-Speicher.

Gemäß weiterer Ausführungsformen der Erfindung ist die Programmroutine eine Schreibroutine, zum Beschreiben des Flash-Speichers oder ein Urlader. Weiterhin kann die Programmroutine die zu schützenden Daten verwenden müssen.

Gemäß einer weiteren vorteilhaften Ausführungsform wird eine bitweise-invertierte Form der zu schützenden Daten ebenfalls in dem Flash-Speicher gespeichert. Damit können die originalen Daten bit-für-bit auf Veränderungen überprüft werden.

Eine zusätzliche Ausführungsform der Erfindung speichert die bitweise-invertierte Form der zu schützenden Daten in einem weiteren Speichersektor des Flash-Speichers, und zusätzlich kann ein weiterer Teil der Programmroutine ebenfalls in dem weiteren Speichersektor gespeichert werden.

Vorteilshafterweise werden die zu schützenden Daten in dem Speichersektor mit der bitweise-invertierten Form der zu schützenden Daten auf Korrespondenz überprüft.

Gemäß einer Ausführungsform der Erfindung wird eine Vorrichtung bereitgestellt zum Speichern zu schützender Daten in einem Flash-Speicher, wobei die Vorrichtung eine Programmroutine für deren Start und/oder Betrieb benötigt. Der Flash-Speicher, der in eine Vielzahl von Speichersektoren unterteilt ist, speichert die zu schützenden Daten in dem selben Speichersektor, in dem wenigstens ein Teil der Programmroutine gespeichert ist.

Gemäß einer Ausführungsform der Erfindung wird auch ein Speichermedium mit Instruktionen bereitgestellt zum Speichern zu schützender Daten auf einem Flash-Speicher, der in eine Vielzahl von Speichersektoren unterteilt ist und in einem Gerät vorgesehen ist, das eine Programmroutine für dessen Start und/oder Betrieb benötigt. Die zu schützenden Daten werden in dem selben Speichersektor gespeichert, in dem wenigstens ein Teil der Programmroutine gespeichert ist.

### KURZE BESCHREIBUNG DER ZEICHNUNGEN

Ausführungsbeispiele der vorliegenden Erfindung werden im Folgenden anhand der Figuren näher erläutert. Es zeigt
- **Fig. 1**: eine schematische Darstellung eines Flash-Speichers, gemäß der Konfiguration einer Ausführungsform der Erfindung, in der ein Programm und die relevanten Daten in dem selben Speichersektor gespeichert sind;
- **Fig. 2**: eine Gegenüberstellung einer originalen und invertierten Form von Daten,
- **Fig. 3**: eine schematische Darstellung eines Flash-Speichers, gemäß der Konfiguration einer weiteren Ausführungsform der Erfindung, in welcher jeweils eine originale und eine invertierte Form der zu schützenden Daten zusammen mit einem Teil eines Programms in einem Speichersektor gespeichert sind; und
- **Fig. 4**: die Gegenüberstellung von Fig. 2, bei der zwei Bits von "1" auf "0" geändert wurden.

### DETAILLIERTE BESCHREIBUNG

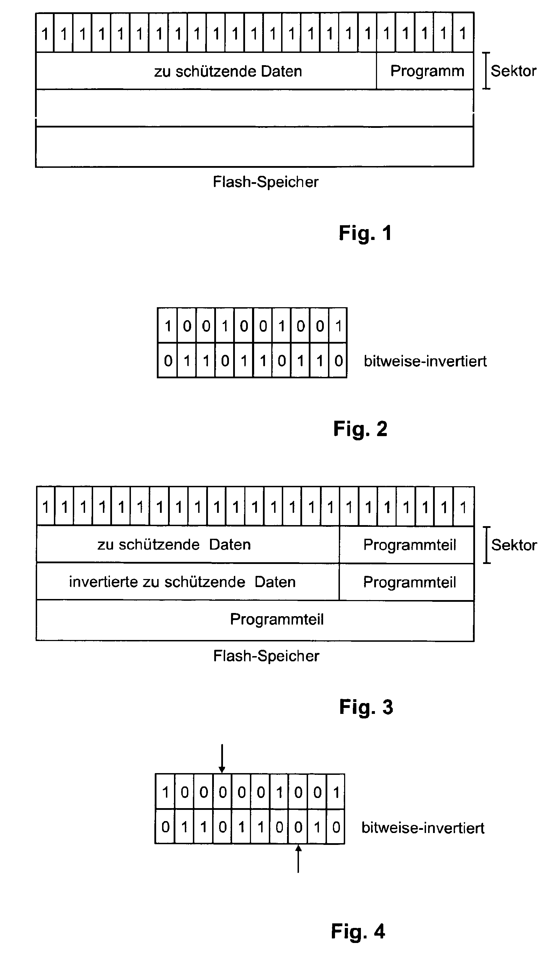

Das erfindungsgemäße Verfahren soll im Folgenden mit Bezug auf die Figuren 1 bis 4 im Detail erläutert werden.

Im Folgenden werden einige Ausführungsbeispiele näher beschrieben, die allerdings nicht als beschränkend anzusehen sein sollen, sondern lediglich als vorteilhafte Ausführungsformen der Erfindung zu verstehen sind. Ein Fachmann ist in der Lage aus der Beschreibung auch auf weitere naheliegende Ausführungsformen zu schließen, auf die wegen der großen Anzahl von Möglichkeiten nicht explizit näher eingegangen werden kann.

Ein Flash-Speicher, wie er beispielhaft in Fig. 1 schematisch dargestellt ist, besteht aus einer bestimmten von der Speichergröße abhängigen Anzahl einzelner Speicherelemente. Die Bytes oder Worte (typisch durchaus bis 64 Bit) können einzeln adressiert werden Dabei können sie in einigen Architekturen auch einzeln geschrieben werden, wogegen bei anderen nur größere Datenmengen auf einmal programmiert werden können. In der Regel ist die entgegengesetzte Operation, das Löschen, aber nur in größeren Einheiten, so genannten Sektoren (meistens ein Viertel, Achtel, Sechzehntel usw. der Gesamtspeicherkapazität) möglich. Dies ist üblicherweise für Flash-Speicher des NOR-Typs der Fall. Dabei ist die logische Polarität nicht immer gleich: es existieren sowohl Implementierungen, die das Programmieren logisch als Übergang logisch '0' nach '1' realisieren, als auch umgekehrt.

Gemeinsames Merkmal ist aber immer, dass die beiden Operationen
- jeweils nur den Übergang in eine Richtung ('0' nach '1' oder'1' nach '0') darstellen, und
- nur eine von beiden bit-selektiv arbeiten kann: das Programmieren.

Das bedeutet, dass bei Flash-Speichern zum Wiederbeschreiben immer erst eine Löschoperation auf einem Sektor nötig ist um dann die gewünschte Bitfolge, also der gewünschte Speicherinhalt, durch Programmieroperationen herzustellen.

Der beispielhafte Flash-Speicher aus Fig. 1 weist 4 Sektoren auf, und weiterhin wird angenommen, dass "1" der Ausgangszustand und "0" der Endzustand eines Bits ist. Somit wäre der erste Sektor des abgebildeten Flash-Speichers noch vollkommen leer.

Gemäß einer Ausführungsform der Erfindung werden die zu schützenden Daten in den gleichen Sektor geschrieben wie ein Programm, das für das Funktionieren eines mit dem Flash-Speicher ausgestatteten Gerätes unerlässlich ist. Dabei muss nicht das komplette Programm in gleichen Sektor wie die relevanten Daten sein, sondern er reicht aus, dass nur ein Teil des Programm im gleichen Sektor gespeichert wird, wobei das Programm ohne diesen Teil nicht funktionieren kann.

Bei diesem Programm kann es sich beispielsweise um einen Urlader handeln, und die zu schützenden Daten sind BIOS-Daten um einen Rechner korrekt hochzufahren. Wenn der Boot-Lader zusammen mit den BIOS-Daten gelöscht oder unausführbar gemacht wird, dann kann der Rechner nicht mehr starten, und Fehlfunktionen aufgrund von fehlenden oder falschen BIOS-Daten können so vermieden werden. Es kann schon das Außerbetriebsetzen des Rechners von Vorteil sein, wenn beispielsweise ein Eindringling die BIOS-Daten ändert um mit dem Rechner weitere Schäden anzurichten.

Das Programm könnte auch eine Schreibroutine des Gerätes sein. Wird diese für einen Speicher grundlegende Befehlsfolge gelöscht oder unausführbar gemacht, kann das Gerät nicht mehr weiter betrieben werden. Auch hier wird verhindert, dass bei einem weiteren Betrieb mit fehlenden oder falschen Daten, Fehler bei dem Gerät (un)beabsichtigt auftreten und zu Schäden führen.

Die obigen Programme sollen nur als Beispiele gedacht sein. Einem Fachmann ist leicht ersichtlich, dass auch andere Programme im Sinne der Erfindung Anwendung finden können. Wichtig ist hierbei hauptsächlich, dass das Löschen (oder wenigstens das unausführbar machen dieses Programms) für das Gerät die Konsequenz hat, dass der eigentliche Betrieb des Gerätes nicht mehr möglich ist, und/oder das Gerät entweder abgeschaltet wird oder in einen sicheren Zustand gebracht wird. Somit können keine Fehlfunktionen und Schäden am Gerät entstehen, und auch ein unerlaubter Benutzer kann das Gerät nicht weiter verwenden.

Bei dem Gerät sind ebenfalls keine Einschränkungen zu machen. Beispielsweise kann das Gerät ein Rechner sein, der auf der Hauptplatine einen Flash-Speicher aufweist, worauf während der Herstellung Standard-BIOS-Daten gespeichert werden, die auf keinen Fall geändert oder gelöscht werden dürfen, da ansonsten eine sichere Startprozedur nicht gewährleistet ist. Dabei können solche Änderungen unbeabsichtigt oder von einen Eindringling beabsichtigt sein. Denkbar wäre auch, dass ein Schadprogramm, wie z.B. ein Virus, fähig ist das BIOS eines Rechnersystems gezielt zu verändern. Aufgrund von den fehlerhaften Konfigurationsdaten des BIOS könnten so an den Komponenten des Rechnersystem Fehlfunktionen und Schäden auftreten.

Ein anderes Beispiel für ein Gerät ist ein Telematikgerät, das mehrere verschiedene Standardkonfigurationen aufweisen kann, die sich zum Beispiel jeweils in den Speicherkonfigurationen oder Eingabe/Ausgabe Einstellungen unterscheiden. Diese verschiedenen Konfigurationsdaten sollten beispielsweise während einer finalen Testphase so gespeichert werden, dass das Gerät nicht mit möglicherweise korrupten oder gelöschten Konfigurationsdaten läuft, um Fehler und Schäden zu vermeiden.

Je nachdem in welchem Gerät die Erfindung implementiert werden soll, unterscheiden sich die Daten und auch die Programme die in Betracht kommen.

Der Fachmann ist in der Lage die hier beschriebenen beispielhaften Ausführungsformen der Erfindung für andere Anforderungen anderer Gebiete anzupassen.

Gemäß einer weiteren Ausführungsform werden die zu schützenden Daten doppelt in dem Flash-Speicher geschrieben, um auch Veränderungen an den Daten sofort ersichtlich zu machen. Und zwar werden die Daten zusätzlich in invertierter Form abgespeichert. Fig. 2 stellt für einige Bits die normale und invertierte Form der Daten gegenüber. Eigentlich handelt es sich um die selben Daten, allerdings ist eine Version invertiert. Damit korrespondieren die Daten miteinander da sie genau umgekehrt sind, und es lässt sich leicht überprüfen ob die relevanten Daten noch übereinstimmen oder geändert wurden.

Im Kombination mit der vorherigen Ausführungsform, in der die Daten zusammen mit einem Programm oder Teil eines Programm innerhalb des gleichen Speichersektors abgespeichert werden, ergibt sich eine Speicherkonfiguration wie sie in Fig. 3 abgebildet ist. Der erste Sektor ist wiederum leer, da alle Bits den Wert "1" aufweisen. Der zweite Speichersektor des Flash-Speichers umfasst die relevanten Daten und einen Programmteil. Der dritte Sektor umfasst eine bitweise-invertierte Form der zu schützenden Daten und einen weiteren Teil des Programms. In der beispielhaften Ausführungsform von Fig. 3 ist das restliche Programm im letzten Speichersektor gespeichert. In der beispielhaften Ausführungsform wird angenommen, dass die invertierte Form der Daten in einem anderen Speichersektor gespeichert wird wie die nicht-invertierte Form der zu schützenden Daten. Dies ist allerdings nicht unbedingt notwendig; es wäre ebenfalls möglich die invertierte und originale Form der Daten an verschiedenen Adressen des gleichen Speichersektors zu speichern. Für die weitere Diskussion wird der Einfachheit halber die Konfiguration gemäß Fig. 3 angenommen.

Eine Prüfroutine kann die beiden Formen der Daten auf Übereinstimmung prüfen, wobei die Prüfroutine beispielsweise regelmäßig gestartet werden kann oder nur jeweils vor einer Verwendung dieser Daten. Dabei wird überprüft, dass die Daten nicht geändert wurden, indem entweder die invertierten Daten nochmals invertiert werden, oder die originalen Daten invertiert werden, um somit die gleiche Form der originalen Daten zu erhalten.

Wie im Folgenden gezeigt werden soll, ist eine Änderung der Daten nicht möglich ohne eine solche Änderung leicht erkennbar zu machen.

Aufgrund der Eigenschaft eines Flash-Speichers können einzelne Bits nur von "1" auf "0" geändert werden, angenommen der Ausgangszustand ist "1" und der Endzustand ist "0", wie oben schon diskutiert. Im Vergleich zu der Bitfolge in Fig. 2 wurden bei der Bitfolge gemäß Fig. 4 zwei Bits auf "0" geändert, jeweils eins bei den originalen und invertierten Daten, wie mit den Pfeilen gekennzeichnet. Eine solche Änderung ist durch einen Vergleich der Daten sofort erkennbar.

Die einzige Möglichkeit die beiden Daten so zu ändern, dass sie trotzdem miteinander übereinstimmen, ist beispielsweise die ersten Daten zu ändern und den Speichersektor der anderen Daten zunächst zu löschen, und dann, gemäß der geänderten Daten im ersten Sektor, mit korrespondierenden invertierten Daten neu zu beschreiben. Mit anderen Worten, ein Speichersektor müsste immer gelöscht werden um bei einer Änderung einer der beiden Daten, die anderen Daten anpassen zu können, sodass diese Änderungen für eine Prüfroutine nicht erkennbar ist. Dies ist eine direkte Folge der Eigenschaften von Flash-Speichern.

Da aber ein Teil des Programms in den Speichersektoren mitgespeichert wurde, würde bei einer Löschung des Sektors dieser Teil des Programms ebenfalls gelöscht, womit das Programm und somit das Gerät nicht mehr funktionsbereit wären.

Durch die eben beschriebene Speicherung von relevanten Daten ist eine unerkannte Änderung der Daten nicht möglich. Entweder erkennt die Prüfroutine einen Unterschied zwischen der originalen und der invertierten Form der Daten. Oder das in den gleichen Speichersektoren gespeicherte Programm ist nicht mehr ausführbar, da eine solche Datenänderung, die die Prüfroutine nicht erkennt, eine Löschung des Sektors erfordert in welchem sich mindestens ein Teil des Programm befindet.

Somit können relevante Daten so in einem Flash-Speicher gespeichert werden, dass eine Änderung der Daten leicht erkennbar ist. Weiterhin ist vorteilhaft, dass keine zusätzliche Hardware notwendig ist oder schon vorhandene Hardware nicht angepasst werden muss, um diese Form der Erkennung zu ermöglichen. Wie schon angedeutet ist die Art und Weise wie die Daten erfindungsgemäß geschützt werden sehr flexibel und kann an viele unterschiedliche Produkte und Konfigurationen angepasst werden.

## Patentansprüche

1. Verfahren zum Speichern zu schützender Daten auf einem Flash-Speicher, wobei der Flash-Speicher in eine Vielzahl von Speichersektoren unterteilt ist und in einem Gerät vorgesehen ist, das eine Programmroutine für dessen Start und/oder Betrieb benötigt, wobei das Verfahren den Schritt umfasst:
Speichern der zu schützenden Daten in dem selben Speichersektor, in dem wenigstens ein Teil der Programmroutine gespeichert ist.

2. Verfahren nach Anspruch 1, wobei der Flash-Speicher ein NOR-Typ Flash-Speicher ist.

3. Verfahren nach Anspruch 1 oder 2, wobei die Programmroutine eine Schreibroutine zum Beschreiben des Flash-Speichers, oder ein Urlader ist.

4. Verfahren nach mindestens einem der vorherigen Ansprüche, wobei die Programmroutine die zu schützenden Daten verwendet.

5. Verfahren nach einem der vorherigen Ansprüche, weiterhin den Schritt umfassend:
Speichern der zu schützenden Daten in bitweise-invertierter Form in den Flash-Speicher.

6. Verfahren nach Anspruch 5, wobei die bitweise-invertierte Form der zu schützenden Daten in einem weiteren Speichersektor des Flash-Speichers gespeichert wird.

7. Verfahren nach Anspruch 6, wobei ein zweiter Teil der Programmroutine zusammen mit der bitweise-invertierten Form der zu schützenden Daten in dem weiteren Speichersektor gespeichert ist.

8. Verfahren nach Anspruch 5, 6 oder 7, weiterhin den Schritt umfassend:
Überprüfen ob die zu schützenden Daten in dem Speichersektor mit der bitweise-invertierten Form der zu schützenden Daten korrespondieren.

9. Verfahren nach Anspruch 8, wobei der Schritt des Überprüfens umfasst:
Invertieren der zu schützenden Daten in dem Speichersektor, und Vergleichen der invertierten zu schützenden Daten des Speichersektors mit der bitweise-invertierten Form der zu schützenden Daten des weiteren Speichersektors, oder
Invertieren der bitweise-invertierten Form der zu schützenden Daten des weiteren Speichersektors, und Vergleichen der zweifach invertierten zu schützenden Daten des weiteren Speichersektors mit den zu schützenden Daten des Speichersektors.

10. Verfahren nach einem der vorherigen Ansprüche, wobei ein einzelnes Bit eines Speichersektors des Flash-Speichers von einem Erstwert, der 1 oder 0 ist, in einen Endwert, der 0 oder 1 ist, geändert werden kann, indem nur dieses einzelne Bit geändert wird, und
wobei ein einzelnes Bit eines Speichersektors des Flash-Speichers von dem Endwert in den Erstwert nur geändert werden kann, indem alle Bits eines Speichersektors in den Erstwert geändert werden.

11. Vorrichtung zum Speichern zu schützender Daten in einem Flash-Speicher; wobei die Vorrichtung eine Programmroutine für deren Start und/oder Betrieb benötigt, umfassend:
Flash-Speicher, der in eine Vielzahl von Speichersektoren unterteilt ist, zum Speichern der zu schützenden Daten in dem selben Speichersektor, in dem wenigstens ein Teil der Programmroutine gespeichert ist.

12. Vorrichtung nach Anspruch 11, wobei die zu schützenden Daten zusätzlich in bitweise-invertierter Form in dem Flash-Speicher, vorzugsweise in einem weiteren Speichersektor des Flash-Speichers, gespeichert werden.

13. Vorrichtung nach Anspruch 12, weiterhin umfassend:
Verarbeitungseinheit zum Überprüfen, ob die zu schützenden Daten in dem Speichersektor mit der bitweise-invertierten Form der zu schützenden Daten in dem weiteren Speichersektor korrespondieren.

14. Vorrichtung nach einem der Ansprüche 11 bis 13, wobei die Vorrichtung ein Telematikgerät ist.

15. Speichermedium zum Aufnehmen von Instruktionen zum Speichern zu schützender Daten auf einem Fiash-Speicher, der in eine Vielzahl von Speichersektoren unterteilt ist und in einem Gerät vorgesehen ist, das eine Programmroutine für dessen Start und/oder Betrieb benötigt, wobei eine Instruktion veranlasst:
Speichern der zu schützenden Daten in dem selben Speichersektor, in dem wenigstens ein Teil der Programmroutine gespeichert ist.
